# EUROPEAN PATENT SPECIFICATION

(11) **EP 1 868 078 B1**
(45) Date of publication and mention of the grant of the patent: **11.11.2015**
(21) Application number: 06012289.2
(22) Date of filing: 14.06.2006
(51) Int. Cl.: G06F 3/147, G06F 3/14

(54) **Method and system for virtual screen management of multimedia content**
Verfahren und System für virtuelles Bildschirmmanagement des Multimediainhalts
Procédé et système pour la gestion d'écran virtuel de contenu multimédia

(43) Date of publication of application: 19.12.2007
(73) Proprietor: Vodafone GmbH, 40549 Düsseldorf (DE)
(72) Inventor: Gaida, Klemens, 40213 Düsseldorf (DE); Cameron, Neill, 06902 Sophia-Antipolis (FR)
(74) Representative: Cullinane, Marietta Bettina

(56) References cited:
- EP-A- 1 612 657
- EP-A2- 1 271 841
- WO-A-2005/071530
- US-A1- 2006 088 277
- PATENT ABSTRACTS OF JAPAN vol. 2003, no. 12, 5 December 2003 (2003-12-05) & JP 2004 144822 A (NEC CORP), 20 May 2004 (2004-05-20)

## Description

The present invention relates to a method and a system for virtual screen management for multimedia content.

In order to provide flexibility to users of computers, while keeping the costs involved for individual components low, communication systems have been developed, wherein terminals are being used to access multimedia content stored on a server. However, a limitation is that display screen areas of existing terminals, such as mobile phones or other IP devices, are limited in their physical size. In most cases the display area is not sufficient to show the multimedia content in a large enough resolution that it is as meaningful as it could be on a larger mobile display.

To address this problem, US2004/0131043A1 suggests a method for the display of standardised large format internet pages on hand-held devices. The method provides that a virtual large image memory is maintained in the device and the device display can be freely displaced as a readable image section. The user can switch between a detailed sectional view of the image and a reduced quality display of the overall image: The drawback of the suggested method is that the user will only be able to see a part of the image in a resolution that allows clear recognition of the image. In some cases it may, however, be desirable or even necessary that the user is able to see the whole image in a clear resolution.

Furthermore, EP 1 271 841 A2 discloses a multiple-contents distribution in a client server system. In this system a set of clients is registered with a server and the server initiates a distribution service for distribution of the contents pieces to the clients, wherein the contents pieces are selected in accordance with the order of the clients. The service such as the content distribution service is delivered from the server to the individual terminals, wherein the terminal to first issue a request is referred to as the session leader terminal. The actual distribution of content to the terminals is, however, always performed by the server. During distribution and display of the content pieces, each terminal communicates with the server. The selection of one terminal to be the session leader terminal only serves for data management at the server. In particular, the session leader terminal may end the registration for a specific service, by sending respective information to the server.

Finally, US 2006/0088277 A1 describes an image/audio playback device of mobile communication terminal. According to this document, image data is received at a control unit which is part of a mobile communication terminal. The image data may be processed at the control unit of the terminal and may be displayed at the display unit of this terminal and at a different terminal. To initiate the display, the terminal receives via user input an image playback order. Subsequently, the terminal recognizes itself as the main terminal and once, subsequently, image data is received, the image data will be displayed at the main terminal and/or be transferred to another connected terminal. One drawback of this device is that the main terminal has to be equipped to display and further process image data. Hence, the distribution of image data and its display is not flexible.

The problem to be solved by the present invention is thus to provide a method and system wherein multimedia content can be easily published and viewed by users on mobile devices. The method and system are to be flexible and should allow for a reliable rendering of multimedia content at several mobile devices.

The invention is defined by the method of claim 1 and the system of claim 8.

The invention is based on the finding that at least two mobile devices are included in a system for publishing multimedia content.

According to a first aspect of the invention, the problem is solved by a method for virtual screen management for multimedia content, wherein parts of a multimedia content element are displayed on at least two mobile device screens of at least two mobile devices, wherein the mobile devices are terminals of a communication network. The method is characterized in that the method comprises the steps of: pre-editing the multimedia content element to include predetermined functions, namely control and rendering information for the multimedia content element, operable by at least one control key of the mobile devices at a processing unit; designating one of the at least two mobile devices as a master at the processing unit which is an originating processing unit, wherein the predetermined functions are only operable by control keys of the master mobile device; and
splitting the multimedia content element into said parts before being transmitted to the at least two mobile devices at the processing unit or at the master mobile device.

A multimedia content element may be for example a multimedia show, such as a slide show, individual pictures and/or a movie. By using at least two mobile device screens to display the multimedia content element the original resolution can be maintained or at least a resolution allowing clear recognition of the multimedia content element on the screens can be achieved. The number of mobile device screens used in the present invention may be selected according to the size and shape of the multimedia content element to be displayed. Since the multimedia content element will be split across the screens of the individual mobile devices, only part of the multimedia content element will be displayed on each of the mobile device screens. By arranging the mobile devices in the appropriate relative position to each other the original multimedia content element can be reassembled.

The mobile devices are mobile phones or terminals of a communication network. It is also possible to use any other IP devices, such as a PDA. In that case the IP device will be equipped with communication means or an interface for communicating over a network such as a mobile network or the internet. Possible networks to be used in the present invention are GPRS/UMTS networks.

According to the invention, the multimedia content element is pre-edited before being displayed to include predetermined functions, entailing predetermined behaviours. The functions are operable by at least one control key of the master mobile device.

The pre-editing of the multimedia content element is effected in a processing unit, such as a computer, e.g. PC, or a server. The pre-editing is thus preferably effected prior to the publication, e.g. pushing of the multimedia content element to other components, such as a server or a mobile device. By editing the multimedia content element in a processing unit the individual settings of different mobile devices can be taken into consideration and the multimedia content element can be published to various mobile devices of different kinds.

The pre-edited multimedia content element will hereinafter also be referred to as a multimedia content file. This file includes the multimedia content element to be displayed or rendered as well as the functions or behaviours, i.e. control or rendering information for the multimedia content element.

Behaviours which might be included in the file are for example to start or stop the rendering of the multimedia content element. Also rewinding and fast forwarding or skipping to a predetermined point within the multimedia content element may be behaviours included within the file. If the content consists of individual events, such as slides, behaviours such as next event or previous event may be implemented. If several media shows are included in a multimedia content element, the behaviours may comprise the options of previous media show, next media show. The behaviours may also include control functions relating to the view of the multimedia content element on the mobile device. Further examples of behaviours will be described later.

By providing a multimedia content element, which is enhanced by control features, the multimedia content element can be controlled at the mobile device, where it is being rendered or displayed. A user who composed the multimedia content element will not have to be at the processing unit or computer, where the multimedia content element was originally created, when publishing it to third parties. Since according to the present invention, the multimedia content element is displayed at least partially on at least two mobile device screens, the user will be able to share the multimedia content with other people in a convenient way, as the presence of the other people at the processing unit is not necessary any longer.

An additional advantage of embedding behaviours into the multimedia content file is that the behaviours can be individualized. It will in particular be possible to include behaviours in the multimedia content file depending on the multimedia content to be rendered. If the multimedia content element for example only includes one event the behaviours of "next event" or "previous event" may be omitted. Thus, the file size of the multimedia content file can be kept to a minimum. It is, however, also possible that a predetermined set of behaviours is stored at the processing unit and will be embedded in the multimedia content element regardless of the structure of the multimedia content element.

The functions or behaviours of the multimedia content that were pre-edited into the multimedia content file are mapped to control keys on at least one of the mobile devices. By mapping the behaviours to control keys on the mobile device, it will be possible to control the rendering of the multimedia content element on different phones without the need to define specific settings at the mobile device. A behaviour such as "start" may for example be mapped to the up-arrow on the keyboard of a mobile device.

According to the invention, one of the mobile devices acts as the master, whereas further mobile devices act as slaves to the master. Therefore only the master mobile device will be able to control the rendering of the multimedia content element. The other mobile devices will receive the necessary rendering information and data from the master mobile device. By limiting the control to only one mobile device and making the other mobile devices dependent of the master mobile device, conflicting control actions effected on different mobile devices can be avoided.

The selection of which mobile device is designated to be the master is done at the processing unit, where the mobile devices to which the multimedia content element is to be publish are selected. In this case, i.e. if one of the mobile devices is designated to be the master, the functions and behaviours implemented in the multimedia content file may further include the ability to change the master, i.e. to transmit the control and rendering information to another mobile device.

In one embodiment, the multimedia content element is split before being transmitted to the at least two mobile devices for display. By providing the option to divide the multimedia content element into sections, which can be displayed on different mobile device screens, before the transmission, i.e. preferably at the originating processing unit, e.g. PC, the amount of mobile devices selected for collaborative display can be taken into account and the multimedia content element may be split accordingly. The processing unit will create respective control functions to assign individual sections of the multimedia content element to each of the mobile devices. These control functions will be made available at the master mobile device and the multimedia content element received or made available at the master mobile device can then be displayed across the different screens.

It, however, also lies within the scope of the present invention to perform the splitting of the multimedia content element at the master mobile device. In that case the master mobile device will be provided with the information on the amount of mobile devices, which are available for display. The function of splitting the multimedia content element may be implemented in the multimedia content file as a function.

The thus split multimedia content element can produce a replication of the original multimedia content element in the original size spread across various screens.

For example a picture, which is part of or represents the multimedia content element can be displayed in its original resolution. By arranging the different mobile devices close to each other, the picture can be re-assembled.

The assigning of different sections of the multimedia content element to individual mobile devices for display may be performed at the processing unit, i.e. PC or server, or at the master mobile device.

According to one embodiment the master mobile device preferably interacts with at least one processing unit and also interacts with at least one other mobile device for forwarding control and rendering information or data to the at least one other mobile device.

The processing unit may be a remote processing unit which may be a network server, for example a server of an IMS (IP Multimedia Subsystem). It may, however, also be that the master mobile device or any of the mobile devices used, interacts with a PC, in particular the originating and editing processing unit, from which the multimedia content element originally stemmed.

By establishing an interaction with an application on a processing unit from at least one of the mobile devices, the multimedia content element can be controlled at the mobile device, but the application running the multimedia content element does not have to be installed at the mobile device. Also changes or annotations made to the multimedia content element at the mobile device may be recorded at the processing unit, if the mobile device interacts with an application on the processing unit.

In a preferred embodiment the originating, editing and publishing processing unit of the multimedia content element is part of a communication network with a wireless communication interface enabled between it and at least one mobile device.

By enabling a wireless communication between the originating processing unit and the mobile device, there is no limitation to the location of display. If the communication to the processing unit, in particular a PC is wired, the display can only be performed in the close proximity of the PC.

Preferably a list of mobile devices is stored in the originating processing unit, i.e. the PC of the user, with a visual indicia of the capability to support mobile virtual screen display. By storing a list of mobile devices in the processing unit, the user can choose from this list the devices and thereby the people to whom the multimedia content element should be published. The list is preferably entered sorted by the user of the individual mobile device and includes the respective contact information, such as the mobile telephone number.

The advantage of creating and storing such a list is, that the user may immediately derive from the list, which devices are capable of supporting mobile virtual screen display. If a person has not installed the necessary software on their device, the list will indicate that. In that case, the user may invite the other person to install the software. The software may then be either downloaded from a server on the internet by the invited party or may be pushed, e.g. via WAP push, to his mobile device.

In one embodiment, the processing unit, i.e. a PC or a server, will push the enhanced multimedia content element, i.e. the multimedia content file, to the master mobile device. At the master mobile device the enhanced multimedia content element, i.e. the multimedia content file, can be used to render the multimedia content and to control the rendering.

It is, however also possible, that the multimedia content file remains on the processing unit, e.g. PC or server and only transmits signals representing the image to be displayed to the master mobile device and possibly the other mobile devices. In that case, any function activated at the master mobile device will be transmitted to the processing unit and the respective behaviour of the multimedia content element will be effected there. The mobile devices acting as slaves to the master mobile device as well as the master mobile device will then be provided with the data and information according to the chosen behaviour, e.g. will receive the data for the next event, if the respective function was activated.

The at least one mobile device other than the designated master may receive control and rendering data at a resident or embedded virtual screen controller on the at least one mobile device from the processing unit, e.g. server or computer, or from the master mobile device. Once the data is received the display or rendering will occur according to the control or rendering data, which originates from the server, PC or from the master mobile device. The virtual screen controller may be a software installed at a mobile device, which enables the collaborative display of multimedia content element from a virtual screen.

The multimedia content element may be pushed to at least one mobile device which sends control and caching control elements to the processing unit, i.e. PC or server, which acts to cache and render the specific parts of the multimedia content for the other mobile devices. With this embodiment it will become possible to interact with the multimedia content element while it is being displayed. The content may for example be annotated while being rendered. The thus annotated content may then be published from the processing unit to other mobile devices at a later stage.

According to another object of the invention, the problem is solved by a system for virtual screen management for multimedia content, comprising at least one processing unit and at least two mobile devices which are terminals of a communication network, wherein at least one of the processing units is an originating processing unit, which is provided for embedding predetermined functions, namely control or rendering information for the multimedia content element, in at least one multimedia content element and this processing units is the originating processing unit where one of the mobile devices is designated as a master mobile device and wherein the predetermined functions are only operable by control keys of the master mobile device, wherein the master mobile device is provided for controlling the display of the parts of the multimedia content element on at least two mobile device screens of at least two of the mobile devices, and wherein the multimedia content element is split into said parts before being transmitted to at least two mobile devices at the processing unit or at the master mobile device.

Preferably the at least one mobile device is communication connection with the originating processing unit or a network server while the multimedia content element is displayed at the at least two mobile devices. Via this connection the mobile device, which is designated to be the master to the other mobile devices, can obtain rendering and control information from the processing unit and can transmit control information and for example annotations to the processing unit.

If the multimedia content element to be displayed is being pushed to the master mobile device, the communication connection does not have to be maintained while the multimedia content element is being displayed at the at least two mobile devices. In that case, the master mobile device will have obtained the enhanced multimedia content element, i.e. the multimedia content file, beforehand and will be able to provide the necessary data and information to the other mobile devices.

The slaves may also be designed to allow for communication with the originating processing unit and another mobile device, in particular the master. The communication of a mobile device other than the master mobile device may be used to transmit annotations to the multimedia content element to the remote processing unit, where the annotations may be stored and transmitted to other mobile devices with the multimedia content element at a later stage.

In one embodiment, the originating processing unit, which may be the PC of a user, comprises a register of enabled mobile devices which can collaboratively render the multimedia content element which is stored on one of the mobile devices or alternatively partially or wholly on the originating processing unit, i.e. the PC or a server, or a network server.

The register may in particular comprise entries indicative of the ability of a mobile device to collaboratively render multimedia content.

With this embodiment it will be easy for the user wanting to publish multimedia content elements to select the mobile devices, where the rendering will be possible. If a mobile device is not in a status to collaboratively render the content, software to enable the device may be downloaded from the respective mobile device or may be pushed to the mobile device.

Features and advantages which are described with reference to the inventive method also apply to the inventive system and vice versa.

The invention will now be described again with reference to the enclosed figures, wherein:
Figure 1 shows a schematic view of an system for the inventive method; and
Figures 2 and 3 show schematic views of multimedia content being rendered at mobile devices.

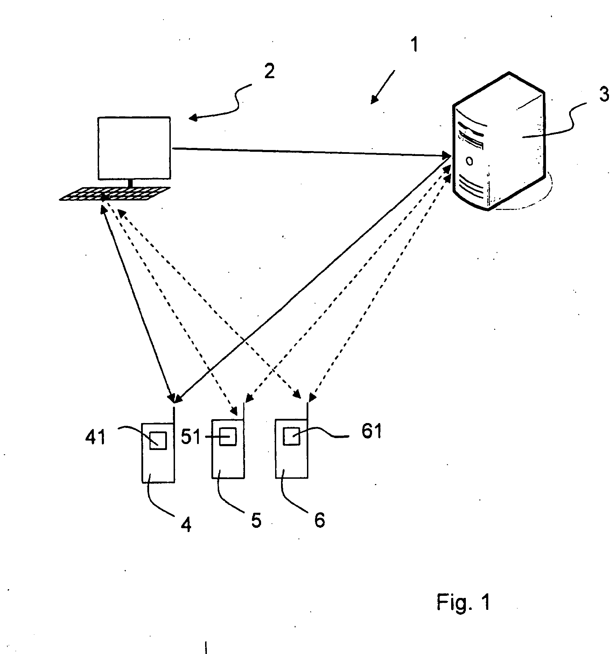

In Figure 1 a system 1 is shown. In the embodiment depicted in Figure 1 the system 1 comprises an originating and editing processing unit 2, such as a PC, a processing unit 3, in particular a network server, as well as three mobile phones 4, 5 and 6. Each mobile phone 4, 5 and 6 has a physical display in form of a screen 41, 51 and 61.

The server 3 is preferably a network server, such as a server on an IMS. The computer 2 can at least temporarily be connected to the network server 3 via a communication network and the internet. The mobile phones 4, 5 and 6 may also be temporarily connected to the network server 3. This connection may be established via a communication network, which may for example be a GPRS / UMTS Standard network.

Also a communication connection between the mobile phones 4, 5 and 6 and the PC 2 may be established. The connection will preferably also be established via the communication network and the Internet. If the mobile phones 4, 5 and 6 are in close proximity to the PC 2 the connection may alternatively be established via NFC-standards, Bluetooth or ZigBee.

One embodiment of the inventive method will now be described in detail. A user of the PC 2 who wishes to share content, in particular multimedia content, with other users may compile the respective multimedia content element and create for example a media show. Such media show, which will also be referred to as a multimedia content element, may comprise images, movies, music and so on. The media show is created on the PC 2. Alternatively the user may decide to only publish one multimedia content part, such as a single picture, in which case he may simply select the multimedia content part to be published. The selected picture will then be considered to be the multimedia content element.

Once the media show has been created or the multimedia content part has been selected, meta-keys are set up. These keys are preferably control functions mapped to the keys of a mobile phone 4, 5, 6. Each control function will be assigned an action or behaviour. Some examples of such behaviours are to stop the media show, to start the media show, to rewind the media show, to fast forward within the media show, to go to the previous event within the media show, which may be the previous slide or picture, to go to the next event, to go to a previous media show, to go to the next media show. The behaviours may also include control functions relating to the view of the multimedia content element on the mobile device, e.g. mobile phone 4, 5, 6.

The multimedia content element or media show with the embedded functions will hereinafter also be referred to as a multimedia content file. Once the thus created media content file, which comprises the multimedia element and the meta-keys, has been created, the user can associate this file to a list of people, i.e. other users, to whom it shall be published.

A list of potential recipients is stored in the PC 2. For easy reference the list may be displayed at the computer 2 with the names of the individual users. Preferably the list will further comprise an indication of the status of the mobile device 4, 5, 6 of the respective user. In particular, the capabilities of the mobile phone 4, 5, 6 may be indicated. Particularly, it may be indicated, whether the individuals have installed a software for collaboratively displaying the media show on their mobile phone 4, 5, 6. This application will hereinafter also be referred to as the visual screen software or controller.

The user may then select the people, who should view the media show. The multimedia content file will be published to the mobile phones 4, 5, 6 of the user which have been selected.

In one embodiment the publishing may be controlled from the PC 2. In this case the multimedia file remains on the PC 2 and the user can control the media show via the Master controller on the PC. It is, however, also possible that the multimedia content file is uploaded to the network server 3 (IMS Server) and the media show will be published form the server 3. In the latter case the PC 2 may be turned off during the media show.

In a further embodiment the multimedia content file will be pushed to at least one of the mobile phones 4, 5, 6, which have been selected on the PC 2. The push may be initiated from either the PC 2 or the server 3, to which the multimedia content file had previously been uploaded.

With the multimedia content file being available at the mobile phone or mobile phones 4, 5, 6, the multimedia content element or media show may be displayed on the screen 41, 51, 61 of the respective phone 4, 5, 6. The control of the display may be performed from the mobile phone 4, 5, 6, as the functions have been embedded into the multimedia content file.

According to the present invention, one of the mobile phones 4, 5, 6 which are selected at the computer 2 is designated to be the master 4 and the remaining mobile phones 5, 6, which are selected, will be slaves to the master 4. In that case, the meta-keys originally embedded in the multimedia content file will only be operable on the master mobile phone 4. The person operating the master mobile phone 4 will then be able to control the media show, for example to start or stop it, whereas the other mobile phones will merely display or render the media show.

As shown in Figure 1, preferably only the designated master mobile phone 4, will communicate with the PC 2 or the server 3 to obtain rendering and control data and information and to transfer data and information to the respective processing unit 2, 3. The additional signalling between the other mobile phones 5, 6 and the PC 2 or the server 3, indicated by the dashed arrows in Figure 1, may be used for transmitting information such as annotations to a media show to the processing unit 2, 3. The signalling between the PC 2 or the server 3 may, however also include the transmission of data relating to a section of a multimedia content element to be displayed at the respective mobile phone 5, 6.

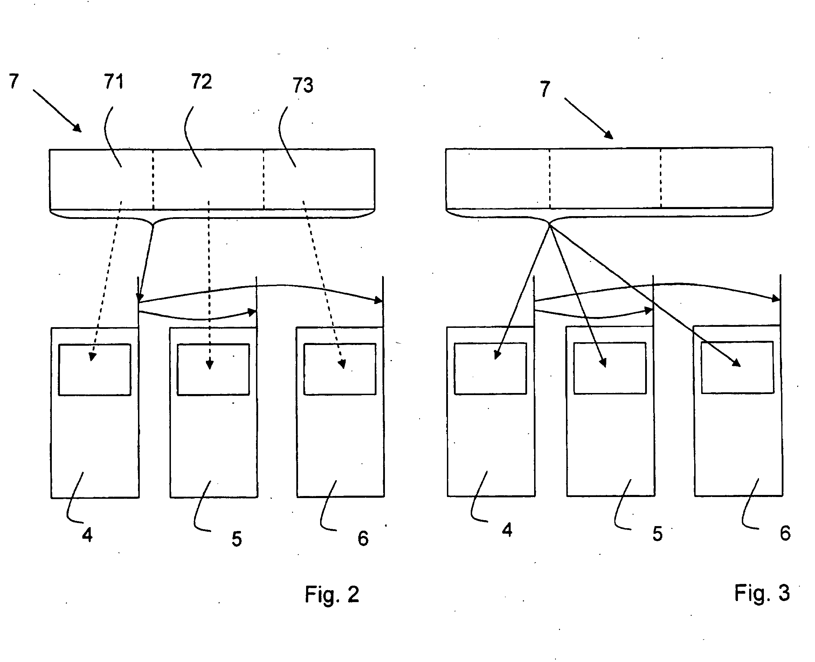

The different ways of displaying the multimedia content element at the mobile devices 4, 5 and 6 are schematically shown in Figure 2 and 3.

The multimedia content element 7 with the control functions may be stored at the server 3 or the originating processing unit, i.e. PC 2. When it is to be published, it may either be pushed or at least be made available at the mobile devices 4, 5 and 6.

In the embodiment shown in Figure 2, the multimedia content element 7 is being pushed to the mobile device 4, which will act as the master mobile device. In the case indicated by the continuous arrows in Figure 2, the whole multimedia content element 7 is received at the mobile device 4. According to functions embedded in the multimedia content file, the master mobile device 4 will transmit control and rendering data and information to the other mobile devices 5 and 6, which act as slaves to the master mobile device 4.

In particular the master mobile device 4 will transmit rendering data relating to the section 72 of the multimedia content element to the mobile device 5 and data relating to the section 73 to the mobile device 6. The multimedia content element 7 will, hence, be displayed across the screens 41, 51, 61 of the mobile devices 4, 5 and 6, wherein each mobile device 4, 5, 6 will display a section 71, 72 and 73 of the multimedia content element 7. The division of the multimedia content element 7 may have been performed at the processing unit 2, 3 before transmittal to the master mobile device 4. It is, however, also possible that the multimedia content element 7 and data or information relating to the amount of mobile devices 5, 6 serving as slaves will be transmitted to the master mobile device 4. In that case the master mobile device 4 will be able to divide the multimedia content element 7 in respective sections 71, 72, 73 and transmit the necessary data to the other mobile devices 5, 6.

It is also possible that the respective sections 71, 72, 73 to be displayed at the individual mobile devices 4, 5 and 6 are being made available to the respective mobile devices 4, 5 and 6 directly from the processing unit 2 or 3. In that case, the master mobile device 4 will still be in control of the rendering of the multimedia content element 7, but will not have the multimedia content element 7 stored in it. This case is indicated by the dashed arrows in Figure 2. The control of the multimedia content element 7 will be performed by control signalling from the master mobile device 4 to the processing unit 2, 3.

The enhanced multimedia content element 7 may comprise the function for the master mobile phone 4 to transfer or pass the control over the media show to other mobile phones 5, 6.

In Figure 3 an alternative embodiment is shown. In this embodiment, the whole multimedia content element 7 will be transmitted to or made available at each mobile device 4, 5 and 6. The master mobile device 4 will then transmit control data and information to the slave mobile devices 5 and 6, indicating which section 71, 72, 73 of the multimedia content element 7 is to be displayed.

With the present invention it is also possible to record voice or other MMI input while the media show is showing across the mobile devices 4, 5, 6. The respective data and information will be transmitted from the mobile devices 4, 5, 6 to the processing unit 2, 3. The annotated media show will be stored at the computer 2 or server 3 and the user may, after the media show, send the annotated media show to friends.

With the present invention it, hence, is possible to flexibly render multimedia content element on various mobile devices. It is in particular possible to display a multimedia content element on mobile devices in a resolution corresponding to the original resolution by collaboratively rendering multimedia content across physical screens of various mobile devices or terminals.

## Claims

1. Method for virtual screen management for multimedia content, wherein parts of a multimedia content element (7) are displayed on at least two mobile device screens (41, 51, 61) of at least two mobile devices (4, 5, 6), wherein the mobile devices are terminals of a communication network, **characterized in that** the method comprises the steps of:
pre-editing the multimedia content element (7) to include predetermined functions, namely control or rendering information for the multimedia content element,
operable by at least one control key of the mobile devices (4, 5, 6) at a processing unit (2, 3);
designating one of the at least two mobile devices (4, 5, 6) as a master (4) at the processing unit which is an originating processing unit (2), wherein the predetermined functions are only operable by control keys of the master mobile device (4);
splitting the multimedia content element (7) into said parts before being transmitted to at least two mobile devices (4, 5, 6) at the processing unit or at the master mobile device (4).

2. Method according to claim 1, **characterized in that** the master mobile device (4) interacts with at least one processing unit, which is the originating processing unit (2) or a network server (3), and also interacts with at least one other mobile device (5, 6) for forwarding control and rendering information or data to the at least one other mobile device (5, 6).

3. Method according to any of claims 1 or 2, **characterized in that** the originating processing unit (2) of the multimedia content element is part of a communication network with a wireless communication interface enabled between the originating processing unit (2) and at least one mobile device (4, 5, 6).

4. Method according to any of claims 1 to 3, **characterized in that** a list of mobile devices is stored in the originating processing unit (2) from which the multimedia content element (7) originates with a visual indicia of the capability to support mobile virtual screen display.

5. Method according to any of claims 1 to 4, **characterized in that** one of the processing units (2, 3), which is the originating processing unit (2) or a network server (3) pushes an enhanced multimedia content element (7) to the master mobile device (4).

6. Method according to any of claims 1 to 5, **characterized in that** the at least one mobile device (5, 6) other than the designated master (4) receives control and rendering data at a resident or embedded virtual screen controller on the at least one mobile device (5, 6).

7. Method according to any of claims 1 to 6, **characterized in that** the multimedia content (7) is being pushed to at least one mobile device (4, 5, 6) which sends control and caching control elements to the processing unit (2, 3) which acts to cache and render the specific parts of the multimedia content element (7) for the other mobile devices (4, 5, 6).

8. System for virtual screen management for multimedia content, comprising at least one processing unit (2, 3) and at least two mobile devices (4, 5, 6) which are terminals of a communication network, **characterized**
**in that** at least one of the processing units (2, 3) is provided for embedding predetermined functions, namely control or rendering information for the multimedia content element (7), in at least one multimedia content element (7) and this processing unit (2, 3) is an originating processing unit (2) where one of the mobile devices (4) is designated as a master mobile device (4),
**in that** the predetermined functions are only operable by control keys of the master mobile device (4), and
**in that** the master mobile device (4) is provided for controlling the display of parts of the multimedia content element (7) on at least two, mobile device screens (41, 51, 61) of at least two of the mobile devices (4, 5, 6); and
**in that** the multimedia content element (7) is split into said parts before being transmitted to at least two mobile devices (4, 5, 6) at the processing unit or at the master mobile device (4).

9. System according to claim 8, **characterized in that** the at least one mobile device (4, 5, 6) is in communication connection with the originating processing unit (2) or a network server (3) while the multimedia content element (7) is being displayed at the at least two mobile devices (4, 5, 6).

10. System according to anyone of claims 8 or 9, **characterized in that** the originating processing unit (2) of the multimedia content element is part of the communication network with a wireless communication interface enabled between the originating processing unit (2) and at least one mobile device (4, 5, 6).

11. System according to anyone of claims 8 to 10, **characterized in that** an originating processing unit (2) comprises a register of enabled mobile devices (4, 5, 6) which can collaboratively render the multimedia content element (7) which is stored on the master mobile device (4) or alternatively partially or wholly on the originating processing unit (2) or the network server (3).

## Patentansprüche

1. Verfahren zur virtuellen Bildschirmhandhabung für Multimediainhalte, wobei Teile eines Multimediainhaltelementes (7) auf mindestens zwei MobilgerätBildschirmen (41, 51, 61) von mindestens zwei Mobilgeräten (4, 5, 6) angezeigt werden, wobei die Mobilgeräte Endgeräte eines Kommunikationsnetzwerkes sind, **dadurch gekennzeichnet, dass** das Verfahren die Schritte umfasst:
Vorbearbeitung des Multimediainhaltselementes (7) an einer Verarbeitungseinheit (2, 3), so dass dieses vorbestimmte Funktionen, nämlich Steuerungs- oder Wiedergabeinformationen für das Multimediainhaltselement einschließt, die durch zumindest eine Steuerungstaste des Mobilgerätes (4, 5, 6) betätigt werden können;
Designieren eines der mindestens zwei Mobilgeräte (4, 5, 6) als ein Master (4) an der Verarbeitungseinheit, die eine Ursprungsverarbeitungseinheit (2) ist, wobei die vorbestimmten Funktionen nur durch Steuerungstasten des Master-Mobilgerätes (4) betätigt werden können;
Aufteilen des Multimediainhaltselementes (7) in die genannten Teile vor der Übermittlung an zumindest ein Mobilgerät (4, 5, 6) an der Verarbeitungseinheit oder an dem Master-Mobilgerät (4).

2. Verfahren gemäß Anspruch 1, **dadurch gekennzeichnet, dass** das Master-Mobilgerät (4) mit zumindest einer Verarbeitungseinheit interagiert, die die Ursprungsverarbeitungseinheit (2) oder ein Netzwerkserver (3) ist, und zudem mit einem anderen Mobilgerät (5, 6) interagiert, um Steuerungs- und Wiedergabeinformationen oder Daten an das mindestens eine andere Mobilgerät (5, 6) weiterzuleiten.

3. Verfahren gemäß einem der Ansprüche 1 oder 2, **dadurch gekennzeichnet, dass** die Ursprungsverarbeitungseinheit (2) des Mulitmediainhaltelementes Teil eines Kommunikationsnetzwerkes mit einer drahtlosen Kommunikationsschnittstelle ist, die zwischen der Ursprungsverarbeitungseinheit (2) und zumindest einem Mobilgerät (4, 5, 6) aktiviert ist.

4. Verfahren gemäß einem der Ansprüche 1 bis 3, **dadurch gekennzeichnet**, das eine Liste von Mobilgeräten in der Ursprungsverarbeitungseinheit (2), von der das Multimediainhaltselement (7) stammt, gespeichert ist, mit einer visuellen Angabe der Fähigkeit mobile virtuelle Bildschirmanzeige zu unterstützen.

5. Verfahren gemäß einem der Ansprüche 1 bis 4, **dadurch gekennzeichnet**, das eine der Verarbeitungseinheiten (2, 3), die die Ursprungsverarbeitungseinheit (2) oder ein Netzwerkserver (3) ist, ein angereicherte Multimediainhaltselement an das Master-Mobilgerät pusht.

6. Verfahren nach einem der Ansprüche 1 bis 5, **dadurch gekennzeichnet, dass** zumindest ein Mobilgerät (5, 6) außer dem designierten Master (4) Steuerungs- und Wiedergabedaten an einer residenten oder eingebetteten Virtual-Screen-Steuerung auf dem mindestens einen Mobilgerät (5, 6) empfängt.

7. Verfahren nach einem der Ansprüche 1 bis 6, **dadurch gekennzeichnet, dass** der Multimediainhalt (7) zu mindestens einem Mobilgerät (4, 5, 6) gepusht wird, das Steuerungs- und Cachesteuerungselemente an die Verarbeitungseinheit (2, 3) sendet, die zum Cachen und zur Wiedergabe der spezifischen Teile des Multimediainhaltselement (7) für die anderen Mobilgeräte (4, 5, 6) agiert.

8. System zur virtuellen Bildschirmverwaltung für Multimediainhalte, umfassend zumindest eine Verarbeitungseinheit (2, 3) und zumindest zwei Mobilgeräte (4, 5, 6), die Endgeräte eines Kommunikationsnetzwerkes sind, **dadurch gekennzeichnet,**
**dass** zumindest eine der Verarbeitungseinheiten (2, 3) zum Einbetten vorbestimmter Funktionen, nämlich Steuerungs- oder Wiedergabeinformationen für das Multimediainhaltselement (7), in zumindest einem Multimediainhaltselement (7) und diese Verarbeitungseinheit (2, 3) eine Ursprungsverarbeitungseinheit (2) ist, an der eines der Mobilgeräte (4) als Master-Mobilgerät (4) designiert ist,
**dass** die vorbestimmten Funktionen nur durch Steuerungstasten des Master-Mobilgerätes (4) betätigbar sind, und
**dass** das Master-Mobilgerät (4) vorgesehen ist um die Anzeige von Teilen des Multimediainhaltselementes (7) auf zumindest zwei Mobilgerätbildschirmen (41, 51, 61) von mindestens zwei Mobilgeräten (4, 5, 6) zu steuern; und
**dass** das Multimediainhaltselement (7) vor der Übertragung an die mindestens zwei Mobilgeräte (4, 5, 6) an der Verarbeitungseinheit oder an dem Master-Mobilgerät (4), in die genannten Teile aufgeteilt wird.

9. System gemäß Anspruch 8, **dadurch gekennzeichnet, dass** zumindest ein Mobilgerät (4, 5, 6) in Kommunikationsverbindung mit der Ursprungsverarbeitungseinheit (2) oder einem Netzwerkserver (3) ist, während das Multimediainhaltselement (7) an den mindestens zwei Mobilgeräten (4, 5, 6) angezeigt wird.

10. System gemäß einem der Ansprüche 8 oder 9, **dadurch gekennzeichnet, dass** die Ursprungsverarbeitungseinheit (2) des Multimediainhaltselementes Teil des Kommunikationsnetzwerkes mit einer drahtlosen Kommunikationsschnittstelle aktiviert zwischen der Ursprungsverarbeitungseinheit und mindestens einem Mobilgerät (4, 5, 6) ist.

11. System gemäß einem der Ansprüche 8 bis 10, **dadurch gekennzeichnet, dass** eine Ursprungsverarbeitungseinheit (2) ein Register von geeignet ausgelegten Mobilgeräten (4, 5, 6) umfasst, die gemeinschaftlich das Multimediainhaltselement (7), das auf dem Master-Mobilgerät (4) oder alternativ teilweise oder vollständig auf der Ursprungsverarbeitungseinheit (2) oder dem Netzwerkserver (3) gespeichert ist, wiedergeben können.

## Revendications

1. Procédé de gestion d'écran virtuel d'un contenu multimédia, dans lequel des parties d'un élément de contenu multimédia (7) sont affichées sur au moins deux écrans de dispositif mobile (41, 51, 61) d'au moins deux dispositifs mobiles (4, 5, 6), dans lequel les dispositifs mobiles sont des terminaux d'un réseau de communication, **caractérisé en ce que** le procédé comprend les étapes de :
pré-édition de l'élément de contenu multimédia (7) de manière à introduire des fonctions prédéterminées, à savoir des informations de commande ou de restitution de l'élément de contenu multimédia, pouvant être activées par au moins une touche de commande des dispositifs mobiles (4, 5, 6) au niveau d'une unité de traitement (2, 3) ;
désignation de l'un des au moins deux dispositifs mobiles (4, 5, 6) en tant que maître (4) au niveau de l'unité de traitement qui est une unité de traitement initiatrice (2), dans lequel les fonctions prédéterminées peuvent uniquement être activées par des touches de commande du dispositif mobile maître (4) ;
décomposition de l'élément de contenu multimédia (7) en lesdites parties avant d'être transmis à moins deux dispositifs mobiles (4, 5, 6) au niveau de l'unité de traitement, ou au niveau du dispositif mobile maître (4).

2. Procédé selon la revendication 1, **caractérisé en ce que** le dispositif mobile maître (4) coopère avec au moins une unité de traitement, qui est l'unité de traitement initiatrice (2) ou un serveur de réseau (3), et coopère aussi avec au moins un autre dispositif mobile (5, 6) afin de transmettre des informations ou données de commande et de restitution à l'au moins un autre dispositif mobile (5, 6).

3. Procédé selon l'une quelconque des revendications 1 ou 2, **caractérisé en ce que** l'unité de traitement initiatrice (2) de l'élément de contenu multimédia est une partie d'un réseau de communication avec une interface de communication sans fil validée entre l'unité de traitement initiatrice (2) et au moins un dispositif mobile (4, 5, 6).

4. Procédé selon l'une quelconque des revendications 1 à 3, **caractérisé en ce qu'**une liste de dispositifs mobiles est mémorisée sur l'unité de traitement initiatrice (2) à partir de laquelle provient l'élément de contenu multimédia (7) avec un indice visuel de la capacité à supporter l'affichage d'écran virtuel mobile.

5. Procédé selon l'une quelconque des revendications 1 à 4, **caractérisé en ce que** l'une des unités de traitement (2, 3), qui est l'unité de traitement initiatrice (2) ou un serveur de réseau (3), mémorise en pile un élément de contenu multimédia (7) amélioré sur le dispositif mobile maître (4).

6. Procédé selon l'une quelconque des revendications 1 à 5, **caractérisé en ce qu'**au moins un dispositif mobile (5, 6) autre que le dispositif maître (4) désigné reçoit des données de commande et de restitution au niveau d'une unité de commande d'écran virtuel résidente ou intégrée sur au moins un dispositif mobile (5, 6).

7. Procédé selon l'une quelconque des revendications 1 à 6, **caractérisé en ce que** le contenu multimédia (7) est mémorisé en pile sur au moins un dispositif mobile (4, 5, 6) qui envoie des éléments de commande et de commande de mise en mémoire tampon à l'unité de traitement (2, 3) qui assure la mise en tampon et la restitution des parties spécifiques de l'élément de contenu multimédia (7) pour les autres dispositifs mobiles (4, 5, 6).

8. Dispositif de gestion d'écran virtuel d'un contenu multimédia, comprenant au moins une unité de traitement (2, 3) et au moins deux dispositifs mobiles (4, 5, 6) qui sont des terminaux d'un réseau de communication, **caractérisé**
**en ce qu'**au moins l'une des unités de traitement (2, 3) est destinée à intégrer des fonctions prédéterminées, à savoir des informations de commande ou de restitution pour l'élément de contenu multimédia (7), sur au moins un élément de contenu multimédia (7) et cette unité de traitement (2, 3) est une unité de traitement initiatrice (2) dans laquelle l'un des dispositifs mobiles (4) est désigné en tant que dispositif mobile maître (4),
**en ce que** les fonctions prédéterminées peuvent être activées uniquement par des touches de commande du dispositif mobile maître (4), et
**en ce que** le dispositif mobile maître (4) est agencé afin de commander l'affichage de parties de l'élément de contenu multimédia (7) sur au moins deux écrans de dispositif mobile (41, 51, 61) d'au moins deux des dispositifs mobiles (4, 5, 6) ; et
**en ce que** l'élément de contenu multimédia (7) est décomposé en lesdites parties avant d'être transmis à au moins deux dispositifs mobiles (4, 5, 6) au niveau de l'unité de traitement ou au niveau du dispositif mobile maître (4).

9. Dispositif selon la revendication 8, **caractérisé en ce que** le au moins un dispositif mobile (4, 5, 6) est en liaison de communication avec l'unité de traitement initiatrice (2) ou un serveur de réseau (3) alors que l'élément de contenu multimédia (7) est affiché au niveau des au moins deux dispositifs mobiles (4, 5, 6).

10. Dispositif selon l'une quelconque des revendications 8 ou 9, **caractérisé en ce que** l'unité de traitement initiatrice (2) de l'élément de contenu multimédia est une partie du réseau de communication avec une interface de communication sans fil validée entre l'unité de traitement initiatrice (2) et au moins un dispositif mobile (4, 5, 6).

11. Dispositif selon l'une quelconque des revendications 8 à 10, **caractérisé en ce que** l'unité de traitement initiatrice (2) comprend un registre de dispositifs mobiles (4, 5, 6) validés qui peuvent restituer en commun l'élément de contenu multimédia (7) qui est mémorisé sur le dispositif mobile maître (4) ou en variante partiellement ou entièrement sur l'unité de traitement initiatrice (2) ou le serveur de réseau (3).
